# FASCICULE DE BREVET EUROPEEN

(11) **EP 2 813 405 B1**
(45) Date de publication et mention de la délivrance du brevet: **30.01.2019**
(21) Numéro de dépôt: 14171317.2
(22) Date de dépôt: 05.06.2014
(51) Int. Cl.: B60S 1/40, B60S 1/38

(54) **Dispositif de fixation d'un balai d'essuie-glace**
Befestigungsvorrichtung eines Scheibenwischerblatts
Device for attaching a windscreen-wiper blade

(30) Priorité: 10.06.2013 FR 1355345
(43) Date de publication de la demande: 17.12.2014
(73) Titulaire: Valeo Systèmes d'Essuyage, 78322 Le Mesnil Saint Denis (FR)
(72) Inventeur: Jehannet, Jean-Pierre, 27200 VERNON (FR); Veret, Jocelyn, 27150 ETREPAGNY (FR); BOUSSET Xavier, 63115 MEZEL (FR)
(74) Mandataire: Callu-Danseux, Violaine

(56) Documents cités:
- EP-A1- 2 597 000
- DE-A9-102011 053 090
- FR-A1- 2 781 741
- FR-A1- 2 981 622

## Description

Le domaine de la présente invention est celui des équipements pour les véhicules, et plus particulièrement celui des équipements pour l'essuyage du pare-brise des automobiles.

Les automobiles sont couramment équipées de systèmes d'essuie-glace pour assurer un lavage du pare-brise et éviter que la vision qu'a le conducteur de son environnement soit perturbée. Ces essuie-glaces comprennent classiquement un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs points en lui conférant un cintrage lui permettant d'épouser l'éventuelle courbure du pare-brise, soit, dans une version plus récente dénommée « flat blade » (pour « balai plat »), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Le balai est attaché au bras tournant de l'essuie-glace par un dispositif de connexion constitué d'un connecteur et d'un adaptateur. Dans les « flat blades », le connecteur est une pièce qui est sertie directement sur la lame racleuse alors que l'adaptateur est une pièce intermédiaire qui permet la connexion du connecteur sur le bras de l'essuie-glace. Ces deux pièces sont reliées l'une à l'autre par un axe transversal d'articulation qui autorise leur rotation relative, dans un plan perpendiculaire au pare-brise et passant par le bras.

Il est connu de tels adaptateurs comprenant un ou des pions flexibles de verrouillage venant s'encliqueter sur le bras de sorte à bloquer l'adaptateur sur ce dernier. Cependant, il convient d'anticiper une défaillance, telle qu'un désengagement du ou des pions, qui risquerait d'entraîner une désolidarisation non désirée du bras et du balai.

Il a déjà été proposé pour traiter ce risque des dispositifs de fixation configurés pour permettre un blocage du balai dans une position de retrait. Par exemple, DE10 2011 053090 A9 et FR 2 781 741 A1 divulguent de tel dispositifs. Plus précisément, en cas de défaillance du pion, le balai est libre en translation par rapport au dispositif de fixation, selon une course prédéfinie, dans une direction située dans un plan perpendiculaire à l'axe d'articulation de l'adaptateur sur le connecteur. En bout de course, une butée située sur le bras entre en contact avec une butée située sur le dispositif de fixation du balai. Autrement dit, en cas de défaillance, le balai en position sur le pare-brise est libre en translation entre sa position nominale de fixation sur le bras et la position de contact entre lesdites butées.

Une telle solution n'est pas entièrement satisfaisante et l'invention vise à améliorer la situation.

Elle propose à cet effet un dispositif de fixation d'un balai d'essuie-glace sur un bras d'entraînement d'un système d'essuyage, ledit dispositif comprenant un adaptateur de raccordement d'un connecteur dudit balai audit bras, ledit adaptateur comprenant au moins un moyen de maintien en une position nominale de blocage sur le bras, ledit adaptateur comprenant en outre au moins un moyen de sécurisation permettant de retenir le bras en position nominale de blocage en cas de défaillance du ou des moyens de maintien.

Selon l'invention, le ou les moyens de maintien sont aptes à agir sur le ou les moyens de sécurisation via au moins un moyen d'activation, le ou les moyens de maintien et le ou les moyens de sécurisation étant configurés pour coopérer avec une face supérieure d'une tête de bras dudit bras.

L'invention permet de la sorte de limiter les risques de désengagement du balai en cas de défaillance du ou des moyens de maintien selon une solution dans laquelle le balai est maintenu en place, même après défaillance du ou des moyens. La fiabilité du dispositif est ainsi améliorée.

D'autre part, l'invention permet de garder accessible une partie inférieure du dispositif de connexion. Elle peut ainsi, entre autres, être utilisée pour des systèmes d'essuyage de type « aqua blade » (« balai hydraulique ») comprenant des balais munis de canaux d'amenée d'eau. En effet, le ou les moyens de sécurisation, lorsqu'ils sont volumineux, encombrent un passage, au niveau de l'adaptateur, qu'il est utile de laisser libre pour recevoir, par exemple, une interface de connexion hydraulique. Autrement dit, l'invention présente un moyen de sécurisation de la liaison bras/balai d'essuyage qui est discret et qui n'encombre pas inutilement un espace situé à l'intérieur de l'adaptateur.

Selon différents modes de réalisation de l'invention, qui pourront être pris ensemble ou séparément :
- le ou les moyens d'activation sont configurés pour permettre d'escamoter le ou les moyens de sécurisation lors du montage et du démontage de l'adaptateur sur le bras,
- ledit adaptateur est configuré pour être lié au connecteur avec un degré de liberté en pivotement autour d'un axe de rotation,
- ledit adaptateur est configuré pour être monté sur le bras selon une direction, dite de montage, située dans un plan perpendiculaire audit axe de rotation,
- l'adaptateur comprend une face dite supérieure et deux faces latérales s'étendant à partir de ladite face supérieure,
- ledit dispositif de fixation est configuré pour que le ou les moyens de maintien, de sécurisation et/ou d'activation soient situés dans le prolongement de la face supérieure de l'adaptateur,
- la face supérieure de l'adaptateur est parallèle à l'axe d'articulation,
- le ou les moyens de maintien comprennent un bouton relié par une languette à la face supérieure de l'adaptateur,
- ladite languette autorise l'escamotage dudit bouton lors du montage et du démontage de l'adaptateur sur le bras,
- le bouton est configuré pour coopérer, en position nominale de blocage, avec une lumière située sur la face supérieure de ladite tête de bras,
- les moyens de sécurisation comprennent au moins une butée reliée par au moins un bras d'articulation à un corps dudit adaptateur, à proximité de la face supérieure dudit adaptateur,
- le ou lesdits bras d'articulation autorisent l'escamotage de la ou desdites butées lors du montage et du démontage de l'adaptateur sur le bras,
- la ou lesdites butées sont aptes à coopérer avec une partie en saillie située sur la face supérieure de ladite tête de bras,
- le ou les moyens d'activation comprennent au moins un téton en saillie par rapport au bouton,
- le ou lesdits tétons sont configurés pour agir sur le ou les bras d'articulation de manière à escamoter la ou les butées lors du montage et du démontage de l'adaptateur sur le bras,
- le ou lesdits tétons font saillie selon une direction parallèle à l'axe de rotation, à partir d'une ou de faces latérales dudit bouton,
- le ou lesdits tétons sont venus de matière avec le bouton,
- le bouton et la ou les butées sont escamotables selon une direction, dite d'escamotage,
- ladite direction d'escamotage comprend une composante perpendiculaire à l'axe de rotation,
- la ou lesdites butées présentent au moins une partie chanfreinée participant à l'escamotage de la ou lesdites butées lors du montage de l'adaptateur dans le bras.

L'invention concerne aussi un bras de système d'essuyage destiné à être raccordé à un balai dudit système d'essuyage par un dispositif tel que décrit ci-dessus.

Selon différents modes de réalisation de l'invention, qui pourront être pris ensemble ou séparément :
- la tête de bras dudit bras d'entraînement comprend une face dite supérieure et deux faces latérales s'étendant à partir de ladite face supérieure,
- la face supérieure de ladite tête de bras d'entraînement est destinée à être parallèle à l'axe d'articulation de l'adaptateur sur le connecteur,
- ladite lumière sert de logement audit bouton,
- ladite partie en saillie s'étend à partir d'un bord de ladite lumière,
- ladite partie en saillie est issue de matière avec le bras,
- ladite partie en saillie est un retour de matière situé au niveau du logement dudit bouton,
- ledit retour de matière est situé dans un plan parallèle à l'axe de rotation.

L'invention concerne encore un ensemble d'un balai d'essuyage et d'un dispositif de fixation tel que décrit ci-dessus, ledit dispositif comprenant ledit connecteur, prévu fixé au balai.

L'invention concerne encore un système d'essuyage comprenant un dispositif de fixation tel que décrit ci-dessus.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés :
- la figure 1 est une vue en perspective d'un exemple de réalisation d'un système d'essuyage selon l'invention, le bras étant seulement illustré au niveau de sa tête de bras ou extrémité distale,
- la figure 2 est une vue détaillée de la figure 1, montrant seulement le balai et le connecteur dudit système,
- la figure 3 reprend la figure 2 en montrant en outre l'adaptateur dudit système,
- la figure 4 reprend la figure 3 en montrant en outre la tête de bras,
- la figure 5 est une vue en perspective, de dessus, de la tête de bras des figures 1 et 4,
- la figure 6 est une vue en perspective, de dessus, de l'adaptateur des figures 1 et 3,
- les figures 7a et 7b illustrent le dispositif de fixation formé par la tête de bras et l'adaptateur des figures 5 et 6, lors du montage de l'adaptateur par rapport à la tête de bras,
- la figure 8 illustre en perspective, la tête de bras et l'adaptateur du dispositif de fixation des figures 7a et 7b lorsque les moyens de maintien sont défaillants, la tête de bras étant représentée en coupe pour des questions de lisibilité,
- la figure 9 illustre en perspective, le dispositif de fixation formé par la tête de bras et l'adaptateur des figures 5 et 6, les moyens de maintien n'étant pas défaillants.

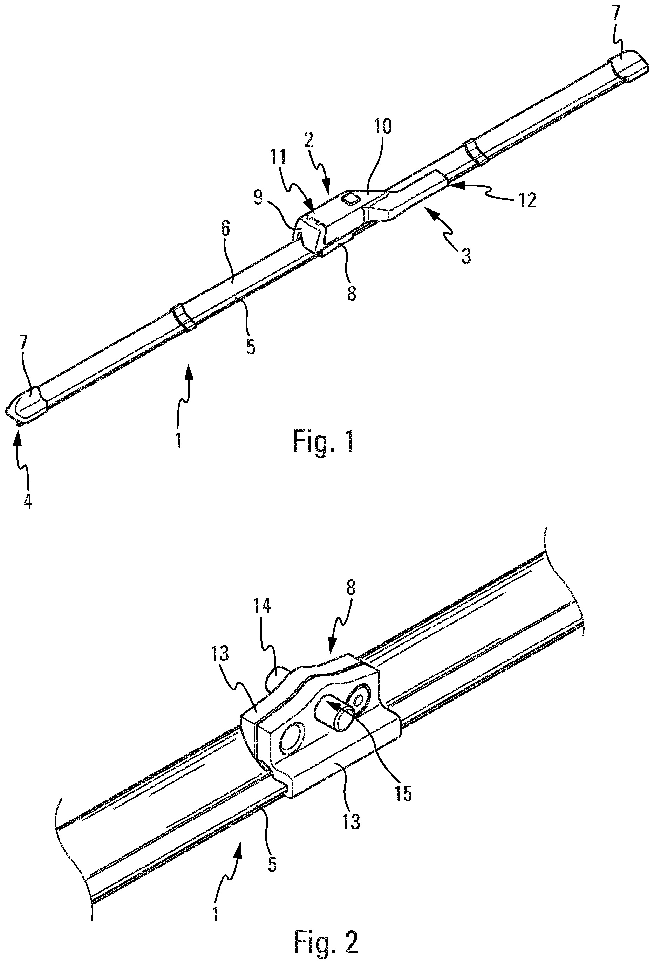

En se référant à la figure 1, on constate que l'invention concerne tout d'abord un dispositif de fixation d'un balai d'essuie-glace sur un bras d'entrainement d'un système d'essuyage.

Ledit système d'essuyage ou essuie-glace comprend un balai 1 et un bras 3 destiné à entrainer le balai 1 dans un mouvement de balayage.

Le balai 1 comprend ici un corps muni d'une lame racleuse 4 et d'une ou plusieurs vertèbres 5 donnant au balai un cintrage lui permettant d'être appliqué correctement sur le pare-brise. Il comprend également un déflecteur 6 et/ou des embouts 7 reliant l'ensemble. Il comprend encore un connecteur 8 en liaison avec le dispositif de connexion 2 dudit système d'essuyage.

Le dispositif de connexion 2 comprend un adaptateur de raccordement 9 et ledit bras 3 ou, à tout le moins, une tête de bras 10 dudit bras 3. Ledit adaptateur 9 est configuré pour assurer une liaison entre ledit bras 3 et ledit connecteur 8.

La tête de bras 10 est ici destinée à être raccordé audit dispositif de connexion 2, en particulier à l'adaptateur 9, par une extrémité distale 11. Ladite tête de bras 10 présente une extrémité proximale 12 fixée à une tige, non illustrée, du bras 3, par exemple par sertissage.

Ledit adaptateur 9 comprend par exemple une face supérieure 22 et des faces latérales, issues de ladite face supérieure 22. Dans la présente description, le terme « supérieur » ne doit pas être considéré comme limitatif mais uniquement de façon relative par rapport au reste du composant en cause. Lesdites faces latérales sont munies d'orifices destinés à coopérer avec l'axe d'articulation 14. Ledit adaptateur 9 présente, par exemple, une forme de chape, à section en U, fermée à l'une de ses extrémités par une face avant 61 reliant ses faces latérales et sa face supérieure 22.

Comme illustré à la figure 2, le connecteur 8 est fixé au balai. On entend par là qu'il est lié au balai sans degré de liberté.

Il présente, par exemple, deux brides 13 symétriques et liées l'une à l'autre, prenant en sandwich le balai 1, ici au niveau des vertèbres 5 dudit balai 1. Lesdites brides 13 comprennent chacune pour cela une rainure de logement desdites vertèbres, situées dans une partie inférieure du connecteur 8.

Ledit connecteur 8 est avantageusement destiné à être monté en pivotement sur l'adaptateur. Il accueille en ce sens un axe d'articulation 14, ici traversant les brides 13 au niveau d'un orifice 15 situé dans une partie supérieure du connecteur 8. Ledit axe d'articulation 14 est destiné à être orienté dans une direction orthogonale au balai 1, dans un plan tangent au pare brise.

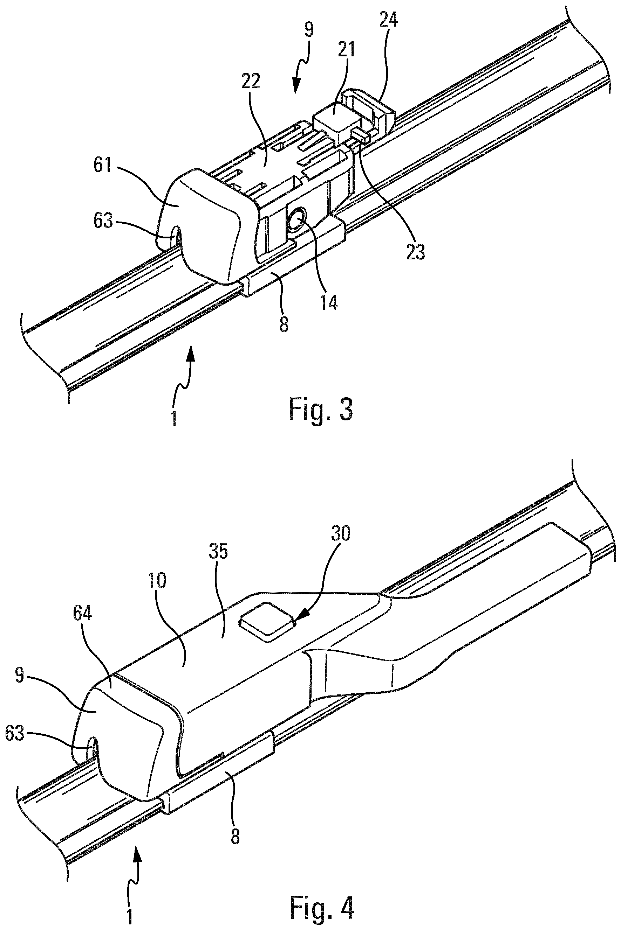

Comme illustré à la figure 3, l'adaptateur 9 est ici configuré pour être lié au connecteur 8 avec un degré de liberté en pivotement autour de l'axe d'articulation 14.

Selon l'invention, ledit dispositif de connexion est configuré pour que, dans une position nominale de blocage, le bras 10 et l'adaptateur 9 soient bloqués l'un par rapport à l'autre par des premiers moyens de liaison dudit dispositif.

Ledit adaptateur 9 comprend ici en ce sens au moins un moyen de maintien 21 en une position nominale de blocage sur le bras 3. Il s'agit, par exemple, d'un pion flexible, prévu sur une face supérieure 22 dudit adaptateur. Ledit pion flexible est ici un bouton 21 relié par une languette 26 à la face supérieure 22 de l'adaptateur 9. Ladite languette 26 autorise l'escamotage dudit bouton 21 lors du montage et du démontage de l'adaptateur 9 sur le bras 3.

Il est intéressant de noter que cet escamotage dudit bouton 21 lors du montage et du démontage de l'adaptateur 9 sur le bras 3 se fait selon une direction, dite d'escamotage, qui comprend une composante perpendiculaire audit axe de rotation 14.

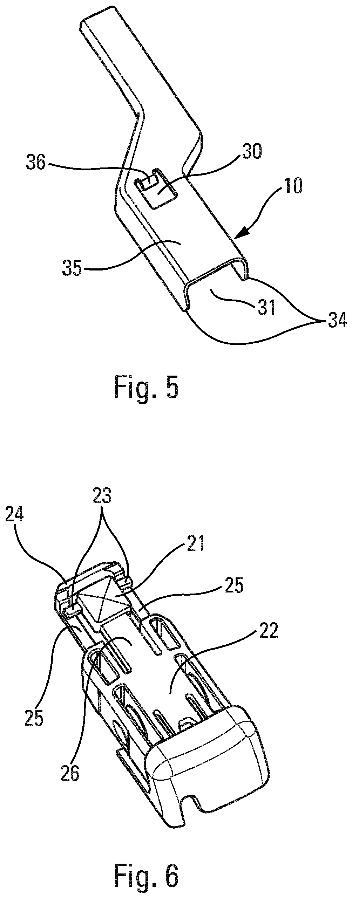

Comme illustré aux figures 4 et 5, la tête de bras 10 du bras 3 comprend ici une lumière 30 de forme complémentaire à celle du bouton 21 sur une face supérieure 35. Lors du montage de l'adaptateur 9 dans le bras 3, ledit bouton 21 vient se loger dans la lumière 30 permettant de la sorte de verrouiller le balai 1 sur le bras 3, dans ladite position nominale de blocage.

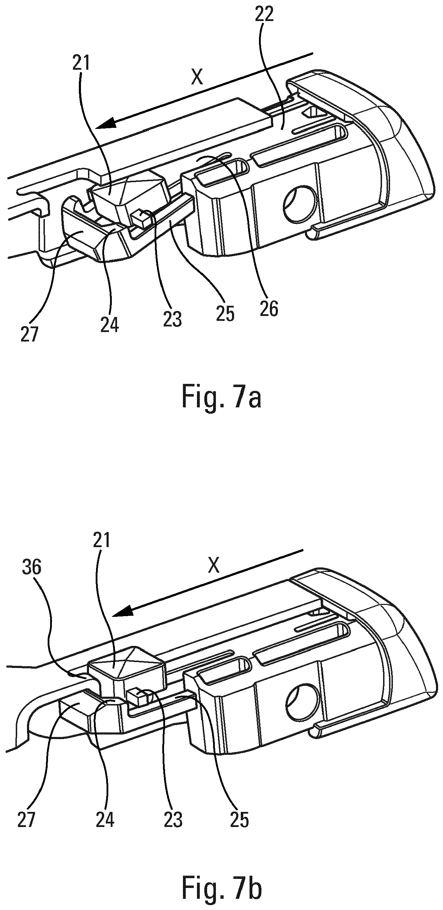

L'adaptateur 9 a ici vocation à s'insérer dans la tête de bras 10 par un mouvement de translation situé dans un plan perpendiculaire à l'axe d'articulation 14, pour venir dans ladite position nominale de blocage. Ladite direction, dite de montage, est référencée X sur les figures 7a et 7b.

La tête de bras 10 est munie pour cela d'une ouverture distale 31 et l'adaptateur 9 est configuré pour être introduit dans ladite ouverture distale 31. Le bouton 21 est alors en position escamoté jusqu'à atteindre la lumière 30 dans laquelle il s'engage alors, de façon réversible.

Toujours selon l'invention, ledit adaptateur comprend en outre au moins un moyen de sécurisation 24 permettant de retenir le bras 3 en position nominale de blocage en cas de défaillance du ou des moyen de maintien 21, tels que, par exemple, une butée 24.

D'autre part, le ou les moyens de maintien 21 sont aptes à agir sur le ou les moyens de sécurisation 24 via au moins un moyen d'activation, tels que, par exemple, au moins un téton 23 en saillie par rapport au bouton 21.

En outre, le ou les moyens de maintien 21 et le ou les moyens de sécurisation 24 sont configurés pour coopérer avec la face supérieure 35 de la tête de bras 10 dudit bras, par exemple avec une partie en saillie 36 prévue sur ladite face supérieure 35 dudit bras 3. Autrement dit, le ou les moyens de sécurisation 24 sont aptes à retenir l'adaptateur 9 par rapport à la tête de bras 10 en cas de défaillance dudit bouton 21, et ce par coopération de forme de la partie en saillie 36, appartenant ici au bras 3, au contact de la butée 24 de l'adaptateur 9. Cela présente l'avantage de proposer un moyen de sécurisation 24 de la liaison bras/balai d'essuyage qui est discret et qui n'encombre pas inutilement un espace situé à l'intérieur de l'adaptateur.

Le ou les moyens d'activation, ou tétons 23, sont avantageusement configurés pour permettre d'escamoter le ou les moyens de sécurisation, ou butée 24, lors du montage et du démontage de l'adaptateur sur le bras.

Comme illustré aux figures 7a et 7b, lesdits tétons 23, sont configurés pour agir sur un ou des bras d'articulation 25 de manière à escamoter la butée 24 lors du montage et du démontage de l'adaptateur 9 sur le bras 3. Cet escamotage se fait par flexion du ou des bras d'articulation 25.

Lesdits tétons font saillie selon une direction parallèle à l'axe de rotation 14, à partir d'une ou des faces latérales dudit bouton 21. Lesdits tétons 23 peuvent être venus de matière avec le bouton 21.

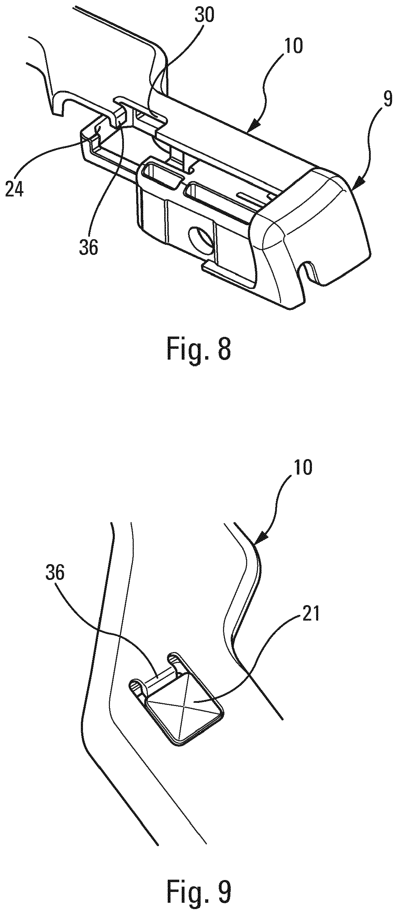

Comme illustré aux figures 8 et 9, ladite partie en saillie 36 s'étend d'un bord de ladite lumière 30, et en particulier issue de matière avec la tête de bras 10. Ladite partie en saillie 36 est un retour de matière situé au niveau du logement du bouton 21, dans un plan parallèle à l'axe de rotation 14.

Ledit adaptateur 9 est ici configuré pour être bloqué, dans la direction de montage X, en cas de défaillance du ou des moyens de maintien 21, comme cela est particulièrement visible sur la figure 8. Un tel blocage permet de renforcer la fiabilité de l'assemblage adaptateur/bras d'essuyage en évitant une désolidarisation du bras 3 et du balai 1 en cas d'une dite défaillance.

La ou lesdites butées 24 sont référencées sur les figures 6, 7a, 7b, 8 et 9. De son côté, la partie en saillie 36 est mieux visibles aux figures 5, 7b, 8 et 9.

Par ailleurs, afin de faciliter le montage de l'adaptateur 9 par rapport à la tête de bras, la butée 24 présentent ici au moins une partie chanfreinée 27 participant à l'escamotage de ladite butée 24 lors du montage de l'adaptateur 9 dans la tête de bras 3.

Si l'on revient aux figures 7a et 7b, on constate que ledit adaptateur 9 présente une section transversale sensiblement en forme de U. La ou lesdites butées 24 sont situées, par exemple, sur une même face de l'adaptateur 9, en particulier sa face supérieure 22.

Autrement dit, le dispositif de l'invention est configuré pour que le ou les moyens de maintien 21, de sécurisation 24 et/ou d'activation 23 soient situés dans le prolongement de la face supérieure 22 de l'adaptateur 9. Encore autrement dit, la butée 24 est reliée par les bras d'articulation 25 à un corps de l'adaptateur 9, c'est-à-dire un bord opposé à celui relié à la surface avant 61, ceci à proximité de la face supérieure 22 de l'adaptateur 9. Lesdits bras d'articulation 25 autorisent l'escamotage de la butée 24 lors du montage et du démontage de l'adaptateur 9 dans la tête de bras 10.

Dans l'exemple illustré, la tête de bras 10 présente une forme sensiblement parallélépipédique creuse dont les faces avant et inférieure sont ouvertes pour laisser passer l'adaptateur 9 et le connecteur 8 qui lui est attaché. La face inférieure comporte des glissières (non illustrées) formant moyens de support pour l'adaptateur 9, et sur lesquelles viennent prendre appui des bords inférieurs dudit adaptateur 9. L'adaptateur 9 présente sensiblement lui aussi la forme d'un parallélépipède avec, sur sa face supérieure 22, le bouton 21. La largeur de l'adaptateur 9 est légèrement inférieure à l'écartement entre les faces latérales 34 de la tête de bras 10 pour que l'adaptateur 9 puisse s'y insérer, mais supérieure à l'écart existant entre les deux glissières de façon que celles-ci puissent le porter. L'adaptateur 9 présente au niveau de sa face avant 61 une fente 63 de passage du balai 3, en particulier de son déflecteur 6.

Les faces latérales 34 de la tête de bras 10 sont identiques l'une à l'autre, au moins dans leur partie d'extrémité avant en contact avec l'adaptateur 9. Lesdites faces latérales 34 sont issues de ladite face supérieure 35 de la tête de bras et sont prolongées par lesdites glissières.

L'adaptateur 9 présente une tête 64, dont les contours sont destinés à se trouver dans la prolongation de la tête de bras 10, en faisant butée en translation selon la direction de montage X pour la face supérieure 35 et les faces latérales 34 de ladite tête de bras 10.

On pourra noter que le connecteur 8 présente une dimension d'extension longitudinale, c'est-à-dire, selon la direction d'extension du balai 1, inférieure à celle de l'adaptateur 9 de sorte qu'il est dissimulé par ce dernier.

Il est à noter que des variantes de réalisation sont bien sûr possibles. Notamment la tête de bras 10, peut être réalisée dans la même matière que le reste du bras, en continuité avec lui.

L'invention trouvera son application, notamment, comme adaptateur pour balais à vertèbres de cintrage ou « flat blade », en particulier dans des systèmes d'essuyage de type « aqua blade » (« balai hydraulique ») comprenant des balais munis de canaux d'amenée d'eau.

## Revendications

1. Dispositif de fixation d'un balai (1) d'essuie-glace sur un bras d'entraînement (3) d'un système d'essuyage, ledit dispositif comprenant un adaptateur de raccordement (9) d'un connecteur (8) dudit balai (1) audit bras (3), ledit adaptateur (9) comprenant au moins un moyen de maintien (21) en une position nominale de blocage sur le bras (3), ledit adaptateur (9) comprenant en outre au moins un moyen de sécurisation (24) permettant de retenir le bras (3) en position nominale de blocage en cas de défaillance du ou des moyens de maintien (21), le ou les moyens de maintien (21) étant aptes à agir sur le ou les moyens de sécurisation (24) via au moins un moyen d'activation (23), **caractérisé en ce que** le ou les moyens de maintien (21) et le ou les moyens de sécurisation (24) sont configurés pour coopérer avec une face supérieure (35) d'une tête de bras (10) dudit bras (3), le ou les moyens de sécurisation comprenant au moins une butée (24) reliée par au moins un bras d'articulation (25) à un corps de l'adaptateur (9), le ou lesdits bras d'articulation (25) autorisant l'escamotage de la ou desdites butées (24) lors du montage et du démontage de l'adaptateur (9) sur le bras (3), la ou lesdites butées (24) étant aptes à coopérer avec une partie en saillie (36) sur la face supérieure (35) de ladite tête de bras (10).

2. Dispositif selon la revendication 1, dans lequel ledit adaptateur (9) est configuré pour être lié au connecteur (8) avec un degré de liberté en pivotement autour d'un axe de rotation (14), ledit adaptateur (9) étant configuré pour être monté sur le bras (3) selon une direction (X), dite de montage, située dans un plan perpendiculaire audit axe de rotation (14).

3. Dispositif selon la revendication précédente, dans lequel l'adaptateur (9) comprend une face dite supérieure (22) et deux faces latérales s'étendant à partir de ladite face supérieure (22), ledit dispositif étant configuré pour que le ou les moyens de maintien (21) soient situés dans le prolongement de la face supérieure (22) de l'adaptateur (9), ladite face supérieure (22) étant parallèle à l'axe d'articulation (14).

4. Dispositif selon la revendication précédente, dans lequel le ou les moyens de maintien (21) comprennent un bouton (21) relié par une languette (26) à la face supérieure (22) de l'adaptateur (9), ladite languette (26) autorisant l'escamotage dudit bouton (21) lors du montage et du démontage de l'adaptateur (9) sur le bras (3).

5. Dispositif selon l'une quelconque des revendications 2 à 4, dans lequel le bouton (21) est configuré pour coopérer, en position nominale de blocage, avec une lumière (30) située sur une face supérieure (22) de ladite tête de bras (10).

6. Dispositif selon l'une quelconque des revendications précédentes, dans lequel le ou les moyens d'activation comprennent au moins un téton (23) en saillie par rapport au bouton (21), le ou lesdits tétons (23) étant configurés pour agir sur le ou les bras d'articulation (25) de manière à escamoter la ou les butées (24) lors du montage et du démontage de l'adaptateur (9) sur le bras (3).

7. Dispositif selon la revendication précédente, dans lequel le ou lesdits tétons (23) sont venus de matière avec le bouton (21).

8. Dispositif selon l'une quelconque des revendications 6 ou 7, dans lequel le ou lesdits tétons (23) font saillie selon une direction parallèle à l'axe de rotation (14), à partir d'une ou de faces latérales dudit bouton (21).

9. Dispositif selon l'une quelconque des revendications 6 à 8, dans lequel le bouton (21) et la ou les butées (24) sont escamotables selon une direction, dite d'escamotage, ladite direction d'escamotage comprenant une composante perpendiculaire à l'axe de rotation (14).

10. Bras (3) de système d'essuyage destiné à être raccordé à un balai (1) dudit système d'essuyage et comprenant un dispositif selon l'une quelconque des revendications précédentes.

11. Bras (3) selon la revendication précédente, dans lequel ladite partie en saillie (36) s'étend à partir d'un bord de ladite lumière (30).

12. Ensemble d'un balai (1) d'essuyage et d'un dispositif de fixation selon l'une quelconque des revendications 1 à 9, ledit dispositif comprenant ledit connecteur (8), prévu fixé au balai (1).

13. Système d'essuyage comprenant un dispositif de fixation selon l'une quelconque des revendications 1 à 9.

## Patentansprüche

1. Befestigungsvorrichtung eines Scheibenwischerblatts (1) auf einem Antriebsarm (3) eines Scheibenwischersystems, wobei die Vorrichtung einen Anschlussadapter (9) eines Verbinders (8) des Wischerblatts (1) am Arm (3) umfasst, wobei der Adapter (9) mindestens ein Haltemittel (21) in einer Sollblockierposition am Arm (3) umfasst, wobei der Adapter (9) ferner mindestens ein Sicherungsmittel (24) umfasst, das es ermöglicht, den Arm (3) in Sollblockierposition im Falle eines Ausfalls des oder der Haltemittel (21) zu halten, wobei das oder die Haltemittel (21) geeignet sind, auf das oder die Sicherungsmittel (24) über mindestens ein Aktivierungsmittel (23) einzuwirken, **dadurch gekennzeichnet, dass** das oder die Haltemittel (21) und das oder die Sicherungsmittel (24) eingerichtet sind, um mit einer Oberseite (35) eines Armkopfes (10) des Arms (3) zusammenzuwirken, wobei das oder die Sicherungsmittel mindestens einen Anschlag (24) umfassen, der durch mindestens einen Gelenkarm (25) mit einem Körper des Adapters (9) verbunden ist, wobei der oder die Gelenkarme (25) das Einziehen des oder der Anschläge (24) bei der Montage und der Demontage des Adapters (9) auf dem Arm (3) gestatten, wobei der oder die Anschläge (24) geeignet sind, mit einem auf der Oberseite (35) des Armkopfes (10) herausragenden Teil (36) zusammenzuwirken.

2. Vorrichtung nach Anspruch 1 bei der der Adapter (9) eingerichtet ist, um mit dem Verbinder (8) mit einem Schwenkfreiheitsgrad um eine Drehachse (14) verbunden zu werden, wobei der Adapter (9) eingerichtet ist, um auf dem Arm (3) in einer so genannten Montagerichtung (X), die sich in einer Ebene senkrecht auf die Drehachse (14) befindet, montiert zu werden.

3. Vorrichtung nach dem vorhergehenden Anspruch, bei dem der Adapter (9) eine so genannte Oberseite (22) und zwei Seitenflächen umfasst, die sich von der Oberseite (22) aus erstrecken, wobei die Vorrichtung derart eingerichtet ist, dass sich das oder die Haltemittel (21) in der Verlängerung der Oberseite (22) des Adapters (9) befinden, wobei die Oberseite (22) parallel zur Gelenkachse (14) ist.

4. Vorrichtung nach dem vorhergehenden Anspruch, bei der das oder die Haltemittel (21) einen Knopf (21) umfassen, der durch eine Lasche (26) mit der Oberseite (22) des Adapters (9) verbunden ist, wobei die Lasche (26) das Einziehen des Knopfes (21) bei der Montage und der Demontage des Adapters (9) auf dem Arm (3) gestattet.

5. Vorrichtung nach einem der Ansprüche 2 bis 4, bei der der Knopf (21) eingerichtet ist, um in Sollblockierposition mit einer Öffnung (30) zusammenzuwirken, die sich auf der Oberseite (22) des Armkopfes (10) befindet.

6. Vorrichtung nach einem der vorhergehenden Ansprüche, bei der das oder die Aktivierungsmittel mindestens einen Zapfen (23) umfassen, der in Bezug zum Knopf (21) herausragt, wobei der oder die Zapfen (23) eingerichtet sind, um auf den oder die Gelenkarme (25) einzuwirken, um den oder die Anschläge (24) bei der Montage und der Demontage des Adapters (9) auf dem Arm (3) einzuziehen.

7. Vorrichtung nach dem vorhergehenden Anspruch, bei der der oder die Zapfen (23) aus einem Stück mit dem Knopf (21) sind.

8. Vorrichtung nach einem der Ansprüche 6 oder 7, bei der der oder die Zapfen (23) in eine Richtung parallel zur Drehachse (14) aus einer oder Seitenflächen des Knopfes (21) herausragen.

9. Vorrichtung nach einem der Ansprüche 6 bis 8, bei der der Knopf (21) und der oder die Anschläge (24) in eine Richtung, Einziehrichtung genannt, einziehbar sind, wobei die Einziehrichtung eine Komponente senkrecht auf die Drehachse (14) umfasst.

10. Arm (3) eines Scheibenwischersystems, der dazu bestimmt ist, an ein Wischerblatt (1) des Scheibenwischersystems angeschlossen zu werden, und umfassend eine Vorrichtung nach einem der vorhergehenden Ansprüche.

11. Arm (3) nach dem vorhergehenden Anspruch, bei dem sich der herausragende Teil (36) von einem Rand der Öffnung (30) aus erstreckt.

12. Einheit aus einem Scheibenwischerblatt (1) und einer Befestigungsvorrichtung nach einem der Ansprüche 1 bis 9, wobei die Vorrichtung den Verbinder (8) umfasst, der dazu vorgesehen ist, am Scheibenwischerblatt (1) befestigt zu werden.

13. Scheibenwischersystem, umfassend eine Befestigungsvorrichtung nach einem der Ansprüche 1 bis 9.

## Claims

1. Device for attaching a windscreen-wiper blade (1) onto a drive arm (3) of a wiper system, said device comprising an adapter (9) connecting a connector (8) of said blade (1) to said arm (3), said adapter (9) comprising at least one holding means (21) at a nominal locking position on the arm (3), said adapter (9) further comprising at least one securing means (24) for retaining the arm (3) in a nominal locking position in the event of failure of the one or more holding means (21), the one or more holding means (21) being capable of acting on the one or more securing means (24) via at least one activation means (23), **characterized in that** the one or more holding means (21) and the one or more securing means (24) are designed to interact with an upper face (35) of an arm head (10) of said arm (3), the one or more securing means comprising at least one stop (24) connected by at least one articulation arm (25) to a body of the adapter (9), the one or more articulation arms (25) allowing the retraction of the one or more stops (24) upon mounting and removal of the adapter (9) on the arm (3), the one or more stops (24) being capable of interacting with a projecting part (36) on the upper face (35) of said arm head (10).

2. Device according to Claim 1, wherein said adapter (9) is designed to be linked to the connector (8) with a degree of freedom in terms of pivoting about a rotation pin (14), said adapter (9) being designed to be mounted on the arm (3) in a direction (X), called the mounting direction, located in a plane perpendicular to said rotation pin (14).

3. Device according to the preceding claim, wherein the adapter (9) comprises a face, called upper face (22), and two lateral faces extending from said upper face (22), said device being designed in order that the one or more holding means (21) are located in the extension of the upper face (22) of the adapter (9), said upper face (22) being parallel to the articulation pin (14).

4. Device according to the preceding claim, wherein the one or more holding means (21) comprise a button (21) connected by a tongue (26) to the upper face (22) of the adapter (9), said tongue (26) allowing the retraction of said button (21) upon mounting and removal of the adapter (9) on the arm (3).

5. Device according to any one of Claims 2 to 4, wherein the button (21) is designed to interact, in the nominal locking position, with a slot (30) located on an upper face (22) of said arm head (10) .

6. Device according to any one of the preceding claims, wherein the one or more activation means comprise at least one stud (23) projecting from the button (21), the one or more studs (23) being designed to act on the one or more articulation arms (25) such as to retract the one or more stops (24) upon mounting and removal of the adapter (9) on the arm (3).

7. Device according to the preceding claim, wherein the one or more studs (23) are made as a single piece with the button (21).

8. Device according to either of Claim 6 or Claim 7, wherein the one or more studs (23) projects in a direction parallel to the rotation pin (14) from one or more lateral faces of said button (21).

9. Device according to any one of Claims 6 to 8, wherein the button (21) and the one or more stops (24) can be retracted in a direction, called the retraction direction, said retraction direction comprising a component perpendicular to the rotation pin (14).

10. Arm (3) of a wiper system intended to be connected to a blade (1) of said wiper system and comprising a device according to any one of the preceding claims.

11. Arm (3) according to the preceding claim, wherein said projecting part (36) extends from an edge of said slot (30).

12. Assembly of a wiper blade (1) and of an attachment device according to any one of Claims 1 to 9, said device comprising said connector (8) provided attached to the blade (1).

13. Wiper system comprising an attachment device according to any one of Claims 1 to 9.
